# EUROPÄISCHE PATENTSCHRIFT

(11) **EP 2 141 264 B1**
(45) Veröffentlichungstag und Bekanntmachung des Hinweises auf die Patenterteilung: **31.08.2011**
(21) Anmeldenummer: 08012170.0
(22) Anmeldetag: 04.07.2008
(51) Int. Cl.: C25B 1/04, C25B 9/18, C25B 9/10

(54) **Vorrichtung zum Erzeugen eines Sauerstoff-/Wasserstoffgemisches**
Apparatus for producing an oxygen/hydrogen mixture
Dispositif destiné à produire un mélange d'oxygène/hydrogène

(43) Veröffentlichungstag der Anmeldung: 06.01.2010
(73) Patentinhaber: H-TEC Wasserstoff-Energie-Systeme GmbH, 23558 Lübeck (DE)
(72) Erfinder: Höller, Stefan, 23552 Lübeck (DE); Küter, Uwe, 23560 Lübeck (DE)
(74) Vertreter: Vollmann, Heiko

(56) Entgegenhaltungen:
- DE-A1- 2 436 833
- DE-A1-102004 038 758
- US-A- 5 845 485
- US-A1- 2005 115 825

## Beschreibung

Die Erfindung betrifft eine Vorrichtung zum Erzeugen eines Sauerstoff-/Wasserstoffgemisches, insbesondere von Knallgas.

Es zählt zum Stand der Technik, Knallgas mittels Elektrolyse aus Kalilauge zu gewinnen. entsprechende Vorrichtungen sind bekannt und werden beispielsweise von Juwelieren zum Löten eingesetzt. Diese Vorrichtungen sind verschleißbehaftet, da sich eine der Elektroden im Laufe der Zeit auflöst. Auch stellt die verwendete Kalilauge eine latente Gefahr dar und ist daher mit besonderer Vorsicht und nur unter Schutzmaßnahmen zu handhaben.

Aus DE 10 2004 038 758 B4 zählt es zum Stand der Technik, einen Elektrolyseur der Polymerelektrolytmembranbauart zur Erzeugung von Wasserstoff und Sauerstoff, wie er an sich bekannt ist, für ein solches Lötgerät einzusetzen. Dabei werden die Gas führenden Leitungen des Elektrolyseurs mit einem gemeinsamen Behälter verbunden, in dem Wasserstoff und Sauerstoff gemischt und das dabei mitgeführte Wasser abgeschieden wird. Das Gasgemisch wird dabei aus dem oberen gasgefüllten Teil des Behälters entnommen wohingegen das im unteren Teil befindliche destillierte Wasser wieder dem Elektrolyseur zugeführt wird.

Die dort beschriebene Vorrichtung ist kostensaufwendig, da zum einen ein Elektrolyseur, also ein Gerät, in dem Wasserstoff und Sauerstoff getrennt gewonnen werden, eingesetzt wird und sie beansprucht zum anderen vergleichsweise großen Bauraum, um den Elektrolyseur, die zahlreichen Leitungen, die erforderlichen Pumpen und den Mischbehälter unter zu bringen.

Vor diesem Hintergrund liegt der Erfindung die Aufgabe zugrunde, eine gattungsgemäße Vorrichtung zum Erzeugen eines Sauerstoff-/Wasserstoffgemisches zu verbessern.

Diese Aufgabe wird gemäß der Erfindung durch eine Vorrichtung mit den im Anspruch 1 angegebenen Merkmalen gelöst. Vorteilhafte Ausgestaltungen der Erfindung sind in den Unteransprüchen, der nachfolgenden Beschreibung und der Zeichnung angegeben.

Die erfindungsgemäße Vorrichtung zum Erzeugen eines Sauerstoff-/Wasserstoffgemisches, insbesondere von Knallgas weist ein Gehäuse auf, in dem mindestens eine Polymerelektrolytmembran angeordnet ist, die beidseitig mit katalytisch wirkenden durchlässigen Elektroden, die zum Anlegen einer elektrischen Gleichspannung vorgesehen sind, versehen ist. Das Gehäuse weist mindestens einen ersten Kanal zu Zufuhr von Wasser zu der Membran-Elektroden-Anordnung sowie mindestens einen zweiten Kanal zu Abfuhr des erzeugten Gasgemisches auf. Erfindungsgemäß ist mindestens eine Ausnehmung innerhalb des Gehäuses vorgesehen, durch welche die an der Membran-Elektroden-Anordnung erzeugten Gase innerhalb des Gehäuses mischbar sind.

Grundgedanke der erfindungsgemäßen Vorrichtung ist es, zum Erzeugen des Gasgemisches aus Sauerstoff und Wasserstoff nicht einen üblichen Elektrolyseur einzusetzen, bei welchem zunächst in aufwendiger Weise die Kathoden- und Anodenseiten hinsichtlich der Gasführung voneinander getrennt werden, um dann in einer weiteren Vorrichtung, z.B. in einem Mischbehälter diese Gase zusammenzuführen und vom Wasser zu trennen, sondern vielmehr eine Vorrichtung zu schaffen, die zwar nach dem Prinzip eines Elektrolyseurs der PEM-Bauart arbeitet, jedoch wesentlich einfacher und somit auch kostengünstiger und raumsparender aufgebaut werden kann. Dies erfolgt gemäß der Erfindung dadurch, dass die Mischung der Gase bereits innerhalb des Gehäuses, also praktisch innerhalb des Elektrolyseurs erfolgt, um auf diese Weise eine solche Vorrichtung vergleichsweise kostengünstig und raumsparend bereitstellen zu können. Dabei wird in einfachster Form bei einer Vorrichtung mit einer oder mehreren Polymerelektrolytmembran-Elektroden-Anordnungen, d.h. -Baueinheiten, die eine ionendurchlässige Polymerelektrolytmembran aufweisen, die beideseitig katalytisch beschichtet ist, durch eine in oder neben der Membran vorgesehene Ausnehmung so auszubilden, dass die elektrolytisch erzeugten Gase unmittelbar nach ihrem Entstehen gemischt werden. Dabei ist unter Ausnehmung im Sinne der Erfindung jegliche Fluidverbindung zwischen Anoden- und Kathodenseite der Membran-Elektroden-Anordnung zu verstehen, die geeignet ist, die dort entstehenden Gase zu mischen.

Neben den räumlichen Vorteilen ergeben sich auch konstruktive Vorteile, da keine aufwendige Abdichtung zwischen Kathoden- und Anodenseite erforderlich ist, sondern die Gase frei übertreten können. In gleicher Weise kann die Wasserführung vereinfacht werden, sodass die erfindungsgemäße Vorrichtung in einfachster Form mit nur einem Kanal zur Wasserzufuhr und nur einem Kanal zur Abfuhr des Gasgemisches und ggf. des darin mitgeführten Wassers/Wasserdampfes ausreicht.

Die erfindungsgemäße Vorrichtung vereint somit einerseits die Vorteile einer geringeren Baugröße sowie andererseits die Vorteile einer kostengünstigeren Herstellung, da der insoweit beim Elektrolyseur bisher betriebene Aufwand zur Trennung der Gasführungen voneinander vollständig entfällt. Dabei kann die erfindungsgemäße Vorrichtung mit nur einer Membran-Elektroden-Anordnung ausgebildet sein oder auch, was hinsichtlich Baugröße und Kosten noch deutlich größere Vorteile bietet, in Stapelform ausgebildet sein. So können zwei oder mehr Membran-Elektroden-Anordnungen zu einem Stapel zusammengefügt sein, wobei jeweils zwischen benachbarten Membran-Elektrodenanordnungen gemäß einer Weiterbildung der Erfindung, kanalbildende Metallbleche als Bipolarplatten angeordnet sind und im Übrigen mechanische Mittel zum Zusammenhalt des Stapels wie typischerweise Zuganker vorgesehen sind. Bei einer solchen Stapelanordnung können auf vergleichsweise geringem Raum große Sauerstoff-/Wasserstoffgemischmengen erzeugt werden. Dabei dienen die Metallbleche einerseits zur elektrisch leitenden Verbindung der Membran-Elektroden-Anordnungen, andererseits jedoch auch zur Fluidführung, sei es für das zuströmende Wasser als auch für die abströmenden Gase. Durch eine solche Kanalführung kann einerseits das für den Elektrolysevorgang über die gesamte Fläche erforderliche Wasser gezielt zugeführt werden, andererseits können die dort entstehenden Gase gezielt abgeführt werden. Diese kanalbildenden Metallbleche sind jeweils zwischen den durchlässigen Elektroden benachbarter Polymerelektrolytmembranen, also zwischen den Membran-Elektroden-Anordnungen angeordnet.

Die kanalbildenden Metallbleche sind vorzugsweise aus reinem Titan oder einer Titanlegierung gebildet und gemäß einer Weiterbildung der Erfindung als Wellbleche ausgebildet. Dabei kann die Wellenform im Querschnitt gerundet, dreieckig, rechteckig oder in anderer Weise gewählt werden, entscheidend ist, dass eine solche Welle in Verbindung mit der daran anliegenden Membran-Elektroden-Anordnung jeweils einen Kanal bildet, der sich zweckmäßigerweise über die gesamte Länge bzw. Breite der Membran-Elektroden-Anordnung erstreckt. Insoweit wird die Größe der Wellbleche vorteilhaft entsprechend der Größe der Membran-Elektroden-Anordnung gewählt, um eine solche Kanalbildung über im Wesentlichen die gesamte Fläche der Membran-Elektroden-Anordnung zu gewährleisten. Durch die Metallbleche wird somit eine Vielzahl von Kanälen längs der Membran-Elektroden-Anordnung gebildet.

Gemäß einer vorteilhaften Weiterbildung der Erfindung sind darüber hinaus Querkanäle für die Wasserzufuhr und die Gasgemischabfuhr bzw. Wasserabfuhr vorgesehen, die einen deutlich größeren Querschnitt als die durch die Metallbleche gebildeten Kanäle aufweisen und quer dazu verlaufen und an die Kanalenden der Metallbleche anschließen. Dabei ist vorteilhaft ein erster Querkanal für die Wasserzufuhr gebildet, der durch Ausnehmungen gebildet ist, die vorteilhaft in oder neben der Membran-Elektroden-Anordnung vorgesehen sind sowie ein zweiter Querkanal für die Abfuhr des Gasgemisches und/oder des mitgeführten Wassers, ebenfalls in oder neben der Membran-Elektrodenanordnung. Es können statt eines gemeinsamen Querkanals großen Querschnitts auch mehrere kleinere Querkanäle kleineren Querschnitts vorgesehen sein, die in Bezug auf die durch die Metallbleche gebildeten Kanäle so angeordnet sein sollten, dass sie jeweils an einem Ende der Kanäle anschließen, also an voneinander abgewandten Kanalenden der Metallbleche angeordnet sind. Auf diese Weise kann unabhängig von der Anzahl der Membran-Elektroden-Anordnungen eine gleichmäßige Elektrolysetätigkeit über die Fläche der einzelnen Membran-Elektroden-Anordnung als auch über die in einem Stapel nebeneinander angeordnete Membran-Elektroden-Anordnungen gewährleistet werden, wenn die Kanalquerschnitte entsprechend dimensioniert werden. Dabei kann schon ein geringer Wasserdruck ausreichen, um die Vorrichtung vollständig zu versorgen, sodass ggf. auf eine Pumpe für die Zufuhr des Wassers verzichtet werden kann, wenn dieses beispielsweise auf einem geodätisch höheren Niveau gelagert oder in anderer geeigneter Weise mit geringem Überdruck zugeführt wird.

Grundsätzlich kann die Umströmung der Membran-Elektroden-Anordnungen über die durch die Metallbleche gebildeten Kanäle im beliebiger Richtung erfolgen. Besonders zweckmäßig ist es jedoch, diese Kanäle im Wesentlichen vertikal anzuordnen, und zwar so, dass sie unten an einem darunter liegenden ersten Querkanal anschließen, welcher destilliertes Wasser führt und oben an einem weiteren, über den Membran-Elektroden-Anordnungen liegenden Querkanal anschließen, über welchen das ohnehin nach oben aufsteigende Gas gemischt und abgeführt wird sowie ggf. auch das mitgeführte Wasser. Dabei kann das mitgeführte Wasser bei entsprechender Ausbildung des Gehäuses der Vorrichtung innerhalb der Vorrichtung abgeschieden und dem unteren Querkanal zugeführt werden oder durch einen externen Wasserabscheider, wobei das Wasser in den Vorratsbehälter für destilliertes Wasser zweckmäßigerweise zurückgeführt wird.

Ein besonders kompakter und zugleich kostengünstiger Aufbau der Vorrichtung ergibt sich, wenn die Membran-Elektroden-Anordnungen jeweils in Rahmen angeordnet sind und die Rahmen in einem oder zu einem dichten Stapel angeordnet und zwischen zwei Endplatten eingespannt sind, wobei jeder Rahmen mindestens eine Ausnehmung für den ersten Querkanal und mindestens eine Ausnehmung für den weiteren Querkanal aufweist, zweckmäßigerweise jeweils im Bereich neben der Membran-Elektroden-Anordnung. Dabei können diese Rahmen in einfacher Weise aus Folien aufgebaut sein, wie dies bei Elektrolyseuren an sich zum Stand der Technik zählt. Es können jedoch auch ggf. geeignete andere Rahmenbauarten gewählt werden, wenn dies zweckmäßig ist. Dabei ist unter Rahmen im Sinne der Erfindung nicht notwendiger Weise ein geschlossener Rahmen zu verstehen, sondern lediglich ein Einspannrahmen, der die Membran-Elektrodenanordnung innerhalb des Gehäuses hält.

Besonders zweckmäßig ist es jedoch, wenn der Rahmen Teil des Gehäuses bildet, also dann vollständig umlaufend ausgebildet ist.

Auch die Metallbleche werden vorteilhaft in Rahmen angeordnet, wobei die Rahmen mit dem Metallblechen in dem Stapel jeweils dichtend zwischen zwei Rahmen mit einer Membran-Elektroden-Anordnung eingegliedert sind und ebenfalls mindestens eine Ausnehmung für den ersten Querkanal und mindestens eine Ausnehmung für den weiteren Querkanal aufweisen. Dabei sind zweckmäßigerweise die Ausnehmungen für die Querkanäle in den Rahmen der Membran-Elektroden-Anordnungen und in den Rahmen mit den Metallblechen fluchtend zueinander angeordnet, sodass sich Querkanäle mit ausreichendem großen und durchgehenden Kanalquerschnitt ergeben.

Die Rahmen für die Metallbleche sind vorteilhaft als Kunststoffspritzgussteile ausgebildet und weisen an einer oder beiden Seiten umlaufende Dichtungen auf, welche bei Anlage an den jeweiligen Membran-Elektrodenanordnungen einen dichten Gehäuseabschluss gewährleisten.

Ungeachtet dessen, ob die Rahmen an einer oder an beiden Seiten eine umlaufende Dichtung aufweisen, werden diese Dichtungen vorteilhaft in einem Fertigungsgang mit den Kunststoffspritzgussteilen der Rahmen hergestellt, und zwar im Mehrkomponentenspritzgussverfahren. Dabei werden die umlaufenden Dichtungen vorteilhaft aus weichelastischem Kunststoff oder aus Gummi oder einem gummiartigen Stoff gebildet.

Vorteilhaft wird das Gehäuse der Vorrichtung nicht durch ein gesondertes Gehäuse sondern durch die ohnehin funktionell vorhandenen Bauteile, nämlich die dichtend aneinander liegenden Rahmen für die Membran-Elektroden-Anordnungen sowie für die Metallplatten und die Endplatten gebildet, die zur elektrischen Kontaktierung der Membran-Elektroden-Anordnung bzw. der Stapelanordnung dienen.

Dabei können die Endplatten ähnlich der Endplatten ausgebildet werden, wie es von Elektrolyseuren oder Brennstoffzellenstapeln bekannt ist, d.h. mit einer ausreichenden Aussteifung, mit Anordnungen von Zugankern, die zweckmäßigerweise durch den gesamten Stapel, insbesondere die Rahmen hindurch greifen, und mit einem elektrischen Anschluss, welcher den elektrischen Leitungsanschluss von außen und eine Kontaktierung im Inneren gewährleistet.

Die für die erfindungsgemäße Vorrichtung Verwendung findenden Endplatten weisen vorteilhaft an ihrer zum Stapelinneren gerichteten Seite eine vorzugsweise aus Kupfer bestehende Elektrode auf, die eine hohe Leitfähigkeit über die gesamte Fläche gewährleistet. Darüber hinaus ist an jeder Elektrode ein von außen zugänglicher elektrischer Anschluss vorgesehen, der mit der Elektrode leitend verbunden ist.

Da Kupfer zwar eine hohe Leitfähigkeit hat, jedoch in Kontakt mit den im Stapel umlaufenden Reaktanden chemisch nicht stabil ist, sind die Elektroden der Endplatten gemäß einer Weiterbildung der Erfindung an ihrer zum Stapelinneren weisenden Seite mit einer elektrisch leitenden, jedoch die Kupferelektrode zum Inneren des Stapels vollständig abschließenden Folie getrennt, diese Folie besteht vorteilhaft aus Titan. Weiterhin vorteilhaft ist es, die Elektrode nach innen hin mit einer zusätzlichen schützenden und den elektrischen Kontakt verbessernden Schicht, z.B. Gold zu versehen.

Zweckmäßigerweise ist in mindestens einer Endplatte eine in einen Querkanal innerhalb des Gehäuses mündende Ausnehmung vorgesehen, die vorzugsweise zu einem Leitungsanschluss an der Außenseite ausgebildet ist. Dabei können in einer Endplatte zwei solche Leitungsanschlüsse, zur Verbindung mit dem beispielsweise unteren und oberen Querkanal vorgesehen sein, es kann jedoch auch in jeder der Endplatten nur ein Leitungsanschluss oder es können in jeder der Endplatte zwei Leitungsanschlüsse vorgesehen sein. Bei ersterer Variante wird der Leitungsanschluss der einen Endplatte in den einen Querkanal und der Leitungsanschluss der anderen Endplatte in den anderen Querkanal münden. Bei letzteren beiden Ausführungen können die Endplatten baulich identisch ausgebildet sein.

Um die Metallbleche im Rahmen festzulegen, sind zweckmäßigerweise metallblechseitige randseitige Ausnehmungen vorgesehen, die von Vorsprüngen im Rahmen durchsetzt sind und eine Formschlussverbindung bilden. Dabei können beispielsweise im Rahmen zylindrische Zapfen vorgesehen sein, welche nach Durchsetzen der Ausnehmungen in den Randbereichen der Metallplatte nach Art eines Nietkopfes geformt werden oder auch Rastverbindungen, bei welchen die Vorsprünge druckknopfartig durch die Ausnehmungen hindurch treten und somit eine feste Verbindung bilden. Die Verbindung dient im Übrigen im Wesentlichen Montagezwecken, da nach erfolgter Montage des Stapels die Bauteile so eng aneinander liegen, dass ein Herausgleiten der Vorsprünge aus den Ausnehmungen nicht möglich ist.

Die Erfindung ist nachfolgend anhand eines in der Zeichnung dargestellten Ausführungsbeispiels näher erläutert. Es zeigen:
- Fig. 1: in schematischer vereinfachter Explosionsdarstellung einen Knallgaserzeuger gemäß der Erfindung,
- Fig. 2: in vergrößerter Darstellung die Einzelheit II in Fig. 1,

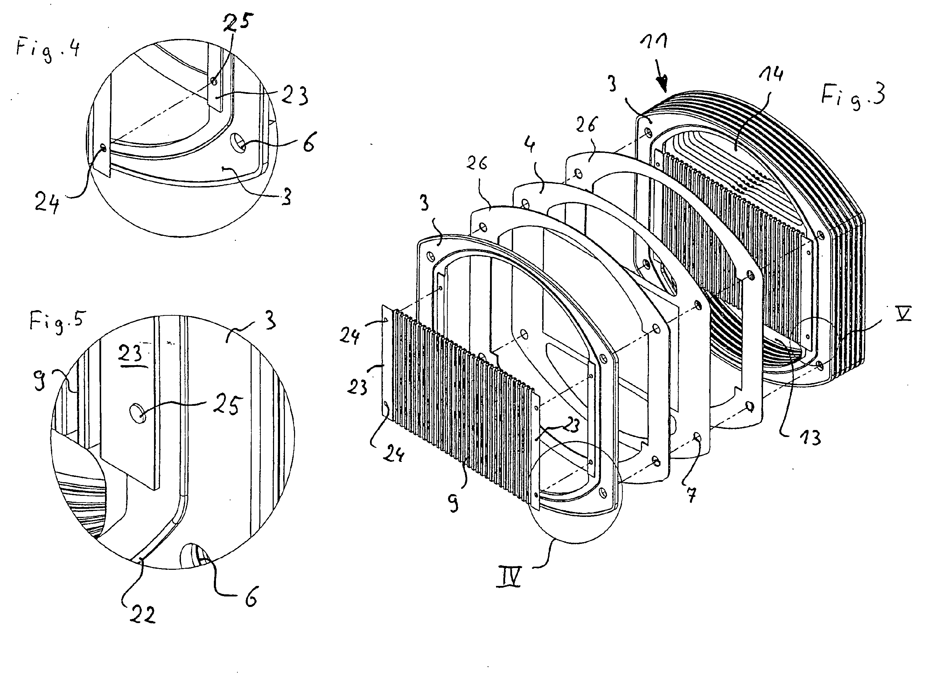

- Fig. 3: die in Rahmen gelagerten Membran-Elektroden-Anordnungen und Metallplatten in Explosionsdarstellung ähnlich wie Fig. 1,
- Fig. 4: die Einzelheit IV in Fig. 3 in vergrößerter Darstellung, und
- Fig. 5: die Einzelheit V aus Fig. 3 in vergrößerter Darstellung.

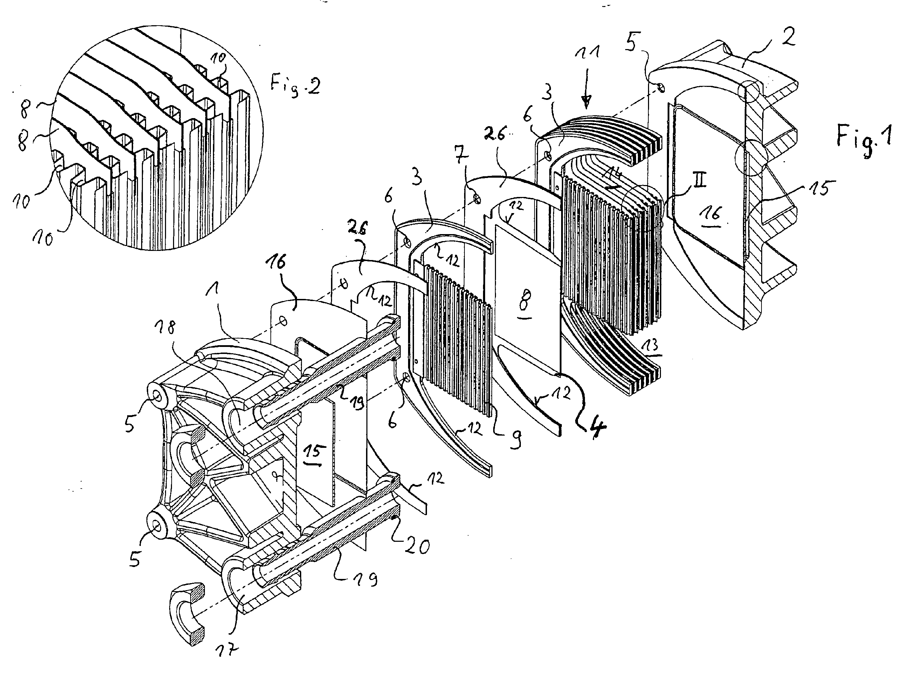

Der Knallgaserzeuger weist ein geschlossenes Gehäuse auf, das im Wesentlichen aus zwei Endplatten 1, 2 mit einer Vielzahl dazwischen eingespannter und abwechselnd zueinander angeordneter Rahmen 3, 4 besteht, die zueinander abgedichtet sind. Die Endplatten 1, 2 und Rahmen 3, 4 haben eine im Wesentlichen rechteckigen Gestalt, sind jedoch in ihrer Ober- und Unterseite (Fig.1) gewölbt ausgebildet. Ihre Außenkontur ist übereinstimmend, sodass sich in zusammengebautem Zustand ein im Wesentlichen quaderförmiges Gehäuse ergibt, das durch vier in den Fig. nicht dargestellte Zuganker gehalten wird, welche durch Ausnehmungen 5 in den Endplatten 1, 2 sowie Ausnehmungen 6, 7 in den Rahmen 3 bzw. 4 geführt sind, die diese Bauteile kraft- und formschlüssig miteinander verbinden, wie dies an sich beim Aufbau von vergleichbaren Elektrolyseuren oder Brennstoffzellen bekannt ist.

Die Rahmen 4, die aus Folie aufgebaut sind, tragen eine Polymerelektrolytmembran, die, wie bei Elektrolyseuren an sich bekannt, beidseitig mit katalytisch wirkenden durchlässigen Elektroden beschichtet ist, nämlich auf der Anodenseite, auf welcher Sauerstoff erzeugt wird, eine Elektrode aus Iridium, einer Iridiumlegierung oder einem Oxyd davon sowie auf der Kathodenseite, auf welcher Wasserstoff erzeugt wird, eine Platinelektrode. Die Elektroden sind auf porösem Kohlenstoff oder auf anderem geeigneten Trägermaterial aufgebracht, wie dies bei Elektrolyseuren der PEM-Bauart an sich bekannt ist, auf die insoweit ausdrücklich verwiesen wird.

Die Rahmen 4 tragen jeweils eine solche Polymerelektrolytmembran-Elektroden-Anordnung 8, auch als Membran-Elektrodeneinheit bezeichnet. Die jeweils zwischen zwei Rahmen 4 angeordneten Rahmen 3 sind als Kunststoffspritzgussteile ausgebildet und tragen jeweils eine Bipolarplatte 9, die aus einem in der Größe im Wesentlichen der Membran-Elektroden-Anordnung 8 entsprechenden aus Titan bestehenden Wellblech gebildet ist. Diese Wellbleche 9 haben eine im Wesentlichen rechteckige Wellenform, sodass sich zu beiden Seiten eine im Wellental bzw. Wellenberg gebildete vergleichsweise breite Anlagefläche zur Anlage an der benachbarten Membran-Elektroden-Anordnung 8 ergibt, welche zur elektrischen Leitung erforderlich ist.

Durch diese Wellbleche 9 werden in Verbindung mit den Membran-Elektroden-Anordnungen 8 Kanäle 10 gebildet, welche an drei Seiten durch das Blech 9 und an der vierten Seite durch die Membran-Elektroden-Anordnung 8 begrenzt werden. Diese Kanäle 10 erstrecken sich im Wesentlichen vertikal über die gesamte Höhe der Membran-Elektroden-Anordnung 8, sodass jede Membran-Elektroden-Anordnung 8 innerhalb des Stapels 11 über ihre gesamte Fläche auf beiden Seiten von vertikalen Kanälen 10 überzogen ist.

Sowohl die Rahmen 3 für die Wellbleche 9 als auch die Rahmen 4 für die Membran-Elektroden-Anordnungen 8 weisen an der Oberseite und Unterseite des Wellblechs 9 bzw. an der Ober- und der Unterseite der Membran-Elektroden-Anordnung 8 eine Ausnehmung 12 auf. Diese Ausnehmungen in benachbarten Rahmenbauteilen 3 und 4 fluchten jeweils zueinander, sodass sich zu den Kanälen 10 gerichtete Querkanäle 13 und 14 ergeben, die den Stapel 11 über die gesamte Länge durchsetzen und in welche die Kanäle 10 münden. So erstrecken sich die Kanäle 10 vom unteren Querkanal 13 bis nach oben zum oberen Querkanal 14.

Die Rahmen 3 und 4 sind zueinander abgedichtet, ebenso wie die Verbindung zwischen Rahmen und den Endplatten 1, 2. Hierzu ist in den Rahmen 3 ein umlaufender Dichtwulst 22 angeordnet, der im Mehrkomponentenspritzgussverfahren zusammen mit dem Rahmen 3 hergestellt ist. Je nach Ausführung kann ein solcher Dichtwulst 22 auch auf der anderen Seite des Rahmens umlaufen oder am Rahmen 4 vorgesehen sein. In der dargestellten Ausführung ist eine aus Folie gebildete Dichtung 26 jeweils zwischen dem Rahmen 3 und dem Rahmen 4 vorgesehen, die nach außen die Konturen der Rahmen 3 und 4 fortsetzt und fluchtend zu den Ausnehmungen 6 und 7 ebenfalls Ausnehmungen aufweist.

Die Titanwellbleche 9 sind am Rahmen 3 nur seitlich, d.h. mit den parallel zu den Kanälen 10 verlaufenden Randbereichen 23 befestigt. Hierzu weisen die Bleche 9 in diesen Randbereichen 23 jeweils zwei Ausnehmungen 24 auf, die von am Rahmen 3 angeformten Zapfen 25 durchsetzt sind. Die Zapfen 25 sind jenseits der Ausnehmungen 24, also nach Auflegen des Blechs 9 in den Rahmen 3 nach Art eines Nietkopfes verformt, sodass eine formschlüssige Verbindung zwischen Zapfen 25 und Ausnehmungen 24 bzw. Rahmen 3 und Blechen 9 gebildet ist. Die Ausbildung von Ausnehmungen 24 und Zapfen 25 kann auch nach Art eines Druckknopfes erfolgen, auch können die Bleche in geeigneter anderer Weise form-, kraft- oder stoffschlüssig in den Rahmen eingegliedert sein.

Die in Fig. 1 hintere Endplatte 2 weist wie auch die vordere Endplatte 1 einen verstärkte Struktur auf und ist lediglich an der zum Stapel weisenden Innenseite im Wesentlichen plattenförmig ausgebildet. Sie weist einen entsprechend zur Anlage an einem Rahmen ausgebildeten Umfangsabschnitt auf sowie eine flächige Kupferelektrode 15 auf, die mit einer Titanfolie 16 dichtend überzogen ist und die eine endseitige Elektrode bildet, deren elektrischer Anschluss in Fig. 1 nicht sichtbar nach außen heraus geführt ist. Die Endplatte 1 ist hinsichtlich der Elektrodenausbildung 15, 16 sowie der Struktur entsprechend ausgebildet, weist jedoch zwei Ausnehmungen 17 und 18 auf, in die von innen hülsenförmige Bauteile 19 eingesetzt sind, die sich mit einem Kragen 20 an der Innenseite der Endplatte 1 abstützen und die an der Außenseite mit einem Gewinde versehen und dort mittels einer Mutter 21 verschraubt sind. Diese hülsenförmigen Bauteile 19 bilden in Einbaulage einen Leitungsanschluss zum unteren Querkanal 13 bzw. zum oberen Querkanal 14.

Wenn die in Figur 1 dargestellten Bauteile wie vorbeschrieben zu dem Knallgaserzeuger zusammengesetzt sind, d.h. wenn die Rahmen 3, 4 mit darin eingegliederten Bauteilen zwischen den Endplatten 1 und 2 mittels der Zuganker verspannt sind, ergibt sich eine geschlossene Vorrichtung, die lediglich zwei durch die Hülsen 19 gebildeten Leitungsanschlüsse aufweist, und zwar den in Fig. 1 in der Ausnehmung 17 durch die Hülse 19 gebildeten Anschluss für die Zufuhr destillierten Wasser und den in Fig. 1 oberen durch die Hülse 19 in der Ausnehmung 18 gebildeten Anschluss für die Abfuhr von Knallgas und ggf. Wasser.

Über die elektrischen Anschlüsse in den Endplatten 1 und 2 wird die Vorrichtung mit der erforderlichen elektrischen Gleichstromenergie versorgt. Destilliertes Wasser wird über den unteren Leitungsanschluss dem durch die Ausnehmungen 12 gebildeten unteren Querkanal 13 mit einem gewissen Druck zugeführt, sodass das Wasser in den Kanälen 10 aufsteigt. Bei Anlegen einer elektrischen Spannung wird nun der Elektrolysevorgang in Gang gesetzt. Es steigen an jeder Membran-Elektroden-Anordnung 8 an der einen Seite Wasserstoff und an der anderen Seite Sauerstoff auf, wobei auch Wasser mitgeführt wird. Diese Gase treten in den durch die oberen Ausnehmungen 12 gebildeten oberen Querkanal 14 ein, wo sie miteinander vermischt werden und über den durch die Ausnehmung 18 geführten Leitungsanschluss durch die Hülse 19 abgezogen werden. Je nach Ausbildung kann das zum oberen Querkanal 14 mitgeführte Wasser innerhalb der Vorrichtung rückgeführt werden oder ggf. auch extern, indem der Gasaustrittsleitung ein Flüssigkeitsabscheider zugeordnet wird.

### Bezugszeichenliste

- 1: - Endplatte
- 2: - Endplatte
- 3: - Rahmen für Wellblech
- 4: - Rahmen für Membran-Elektrodenanordnung
- 5: - Ausnehmungen in den Endplatten
- 6: - Ausnehmungen im Rahmen 3
- 7: - Ausnehmungen im Rahmen 4
- 8: - Membran-Elektrodenanordnung/Membran-Elektrodenbaueinheit
- 9: - Bipolarplatte/Wellblech
- 10: - Kanäle
- 11: - Stapel
- 12: - Ausnehmungen
- 13: - Querkanal unten
- 14: - Querkanal oben
- 15: - Kupferetektrode
- 16: - Titanfolie
- 17: - Ausnehmung unten in der Endplatte 1
- 18: - Ausnehmung oben in der Endplatte 1
- 19: - hülsenförmige Bauteile
- 20: - Kragen von 19
- 21: - Mutter
- 22: - Dichtwulst
- 23: - Randbereich
- 24: - Ausnehmung
- 25: - Zapfen
- 26: - Foliendichtung

## Patentansprüche

1. Vorrichtung zum Erzeugen eines Sauerstoff-/ Wasserstoffgemisches, insbesondere von Knallgas, mit mindestens einer in einem Gehäuse (1, 2, 3, 4) angeordneten Polymer-Elektrolyt-Membran, die beidseitig mit katalytisch wirkenden durchlässigen Elektroden, die zum Anlegen einer elektrischen Gleichspannung vorgesehen sind, versehen ist, mit mindestens einem ersten Kanal (17, 19) zur Zufuhr von Wasser zur Membran-Elektroden-Anordnung (8), **dadurch gekennzeichnet, dass** mindestens eine Ausnehmung (12) vorgesehen ist, durch welche die an der Membran-Elektroden-Anordnung (8) erzeugten Gase innerhalb des Gehäuses (1, 2, 3, 4) miteinander mischbar sind und dass mindestens ein zweiter Kanal (18, 19) zur Abfuhr des erzeugten Gasgemisches aus dem Gehäuse (1, 2,3,4) vorgesehen ist.

2. Vorrichtung nach Anspruch 1, **dadurch gekennzeichnet, dass** zwei oder mehr Membron-Elektroden-Anordnungen (8) zu einem Stapel (11) zusammengefügt sind, wobei jeweils zwischen benachbarten Membran-Elektroden-Anordnungen (8) kanalbildende Metallbleche (9) als Bipolarplatten angeordnet sind, und mit mechanischen Mitteln zum Zusammenhalt des Stapels (11).

3. Vorrichtung nach Anspruch 1 oder 2, **dadurch gekennzeichnet, dass** die Metallbleche (9) durch vorzugsweise aus Titan oder einer Titanlegierung bestehende Wellbleche gebildet sind.

4. Vorrichtung nach einem der vorhergehenden Ansprüche, **dadurch gekennzeichnet, dass** minderstens ein durch Ausnehmungen (12) gebildeter erster Querkanal (13) für die Wasserzufuhr und mindestens ein durch Ausnehmungen (12) gebildeter weiterer Querkanal (14) für die Gasgemisch- und/oder Wasserabfuhr vorgesehen sind, wobei diese Querkante (13, 14) an voneinander abgewandten Kanalenden der Metallbleche (9) angeordnet sind.

5. Vorrichtung nach einem der vorhergehenden Ansprüche, **dadurch gekennzeichnet, dass** die Metallbleche (9) so angeordnet und ausgerichtet sind, dass die dadurch gebildeten Kanäle (10) im wesentlichen vertikal zwischen dem unten liegenden ersten Quer kanal (13) und dem oben liegenden weiteren Querkanal (14) angeordnet sind.

6. Vorrichtung nach einem der vorhergehenden Ansprüche, **dadurch gekennzeichnet, dass** die Membran-Elektroden-Anordnungen (8) jeweils in Rahmen (4) angeordnet sind und die Rahmen (4) in einem oder zu einem dichten Stapel (11) angeordnet und zwischen zwei Endplatten (1, 2) eingespannt sind, wobei jeder Rahmen (4) mindestens eine Ausnehmung (12) für den ersten Querkanal (13) und mindestens eine Ausnehmung (12) für den weiteren Querkanal (14) aufweist.

7. Vorrichtung nach einem der vorhergehenden Ansprüche, **dadurch gekennzeichnet, dass** die Metallbleche (9) jeweils in Rahmen (3) angeordnet sind und die Rahmen (3) mit den Metallblechen (9) in dem Stapel (11) jeweils dichtend zwischen zwei Rahmen (4) mit einer Membran-Elektroden-Anordnung (8) eingegliedert sind, wobei jeder Rahmen (3, 4) mindestens eine Ausnehmung (12) für den ersten Querkanal (13) und mindestens eine Ausnehmung (12) für den weiteren Querkanal (14) aufweist.

8. Vorrichtung nach einem der vorhergehenden Ansprüche, **dadurch gekennzeichnet, dass** die Metallbleche (9) randseitig Ausnehmungen (24) aufweisen, die von Vorsprüngen (25) im Rahmen (3) durchsetzt sind und eine Formschlußverbindung bilden.

9. Vorrichtung nach einem der vorhergehenden Ansprüche, **dadurch gekennzeichnet, dass** die Rahmen (3) insbesondere für die Metallbleche (9) als Kunststoffspritzgussteile ausgebildet sind.

10. Vorrichtung nach einem der vorhergehenden Ansprüche, **dadurch gekennzeichnet, dass** die Rahmen (4) insbesondere für die Membran-Elektroden-Anordnungen (8) aus Folien aufgebaut sind.

11. Vorrichtung nach einem der vorhergehenden Ansprüche, **dadurch gekennzeichnet, dass** die Rahmen (3) an mindestens einer Seite eine umlaufende Dichtung (22) aufweisen, die vorzugsweise im Zweikomponentenspritzgussverfahren zusammen mit dem Rahmen (3) hergestellt ist.

12. Vorrichtung nach einem der vorhergehenden Ansprüche, **dadurch gekennzeichnet, dass** das Gehäuse (1, 2, 3, 4) durch die Rahmen (3, 4) und die Endplatten (1, 2) gebildet ist.

13. Vorrichtung nach einem der vorhergehenden Ansprüche, **dadurch gekennzeichnet, dass** die Endplatten (1, 2) jeweils an ihrer zum Stapelinneren gerichteten Seite eine vorzugsweise aus Kupfer bestehende Elektrode (15) aufweisen, die mit einem von außen zugänglichen elektrischen Anschluß leitend verbunden ist.

14. Vorrichtung nach einem der vorhergehenden Ansprüche, **dadurch gekennzeichnet, dass** die Elektroden (15) der Endplatten (1, 2) durch eine vorzugsweise aus Titan bestehende Folie (16) vom Inneren des Gehäuses getrennt sind.

15. Vorrichtung nach einem der vorhergehenden Ansprüche, **dadurch gekennzeichnet, dass** in mindestens einer Endplatte (1) eine in einen Kanal (13, 14) mündende Ausnehmung (17, 18) vorgesehen ist, die vorzugsweise zu einem Leitungsanschluss (19) an der Außenseite ausgebildet ist.

## Claims

1. A device for producing an oxygen/hydrogen mixture, in particular of oxyhydrogen, with at least one polymer-electrolyte membrane which is arranged in a housing (1, 2, 3, 4) and which is provided on both sides with catalytically acting permeable electrodes which are envisaged for applying an electrical d.c. voltage, with at least one first channel (17, 19) for the supply of water to the membrane-electrode arrangement (8), **characterised in that** at least one recess (12) is provided, by way of which the gases produced at the membrane-electrode arrangement (8) may be mixed with one another within the housing (1, 2, 3, 4) and that at least one second channel (18, 19) is provided for the discharge of the produced gas mixture out of the housing (1, 2, 3, 4).

2. A device according to claim 1, **characterised in that** two or more membrane-electrode arrangements (8) are joined together into a stack (11), wherein in each case channel-forming sheet-metal parts (9) as bipolar plates are arranged between adjacent membrane-electrode arrangements (8), and with mechanical means for holding the stack (11) together.

3. A device according to claim 1 or 2, **characterised in that** the sheet metal parts (9) are formed preferably of titanium or of corrugated sheet-metal parts consisting of a titanium alloy.

4. A device according to one of the preceding claims, **characterised in that** at least one first transverse channel (13) formed by recesses (12) is provided for the water supply and at least one further transverse channel (14) formed by recesses (12) is provided for the removal of gas mixture and/or water, wherein these transverse channels (13, 14) are arranged on channel ends of the sheet metal parts (9), said channels ends being away from one another.

5. A device according to one of the preceding claims, **characterised in that** the sheet-metal parts (9) are arranged and aligned such that the channels (10) which are formed by way of this are arranged in an essentially vertical manner between the first transverse channel (13) lying at the bottom and the further transverse channel (14) lying at the top.

6. A device according to one of the preceding claims, **characterised in that** the membrane-electrode arrangements (8) in each case are arranged in frames (4) and the frames (4) are arranged in a sealed stack (11) or into a sealed stack (11) and clamped between two end-plates (1, 2), wherein each frame (14) comprises at least one recess (12) for the first transverse channel (13) and at least one recess (12) for the further transverse channel (14).

7. A device according to one of the preceding claims, **characterised in that** the sheet metal parts (9) in each case are arranged in frames (3) and the frames (3) with the sheet metal parts (9) are incorporated into the stack (11) in each case in a sealing manner between two frames (4) with a membrane-electrode arrangement (8), wherein each frame (3, 4) comprises at least one recess (12) for the first transverse channel (13) and at least one recess (12) for the further transverse channel (14).

8. A device according to one of the preceding claims, **characterised in that** the sheet metal parts (9) on the edge side comprise recesses (24) through which projections (25) in the frame (3) pass and which form a positive-fit connection.

9. A device according to one of the preceding claims, **characterised in that** the frames (3), in particular for the sheet-metal parts (9), are designed as plastic injection moulded parts.

10. A device according to one of the preceding claims, **characterised in that** the frame (4), in particular for the membrane-electrode arrangements (8), are constructed of films.

11. A device according to one of the preceding claims, **characterised in that** the frames (3) on at least one side comprise a peripheral seal (22) which preferably is manufactured in a two-component injection moulding method together with the frame (3).

12. A device according to one of the preceding claims, **characterised in that** the housing (1, 2, 3, 4) is formed by the frame (3, 4) and the end-plates (1, 2).

13. A device according to one of the preceding claims, **characterised in that** the end-plates (1, 2) in each case at their side directed the inside of the stack comprise an electrode (15) which consists preferably of copper and which is conductively connected to an electrical connection which is accessible from the outside.

14. A device according to one of the preceding claims, **characterised in that** the electrodes (15) of the end-plates (1, 2) are separated from the inside of the housing by a film (16) which consists preferably of titanium.

15. A device according to one of the preceding claims, **characterised in that** a recess (17, 18) which runs out into a channel (13, 1 4) and which is preferably formed into a conduit connection (19) on the outer side, is provided in at least one end-plate (1).

## Revendications

1. Dispositif pour produire un mélange oxygène/hydrogène, en particulier de gaz détonant, comportant au moins une membrane électrolyte polymère, disposée dans une enveloppe (1, 2, 3, 4), qui sur ses deux côtés est pourvue d'électrodes perméables à activité catalytique, qui sont prévues pour appliquer une tension électrique continue, et comportant au moins un premier canal (17, 19) destiné à l'amenée d'eau à l'arrangement membrane-électrode (8), **caractérisé en ce qu'**au moins un évidement (12) est prévu, par lequel les gaz produits au niveau de l'arrangement membrane-électrode (8) peuvent être mélangés les uns aux autres à l'intérieur de l'enveloppe (1, 2, 3, 4), et **en ce qu'**au moins un deuxième canal (18, 19) est prévu pour évacuer de l'enveloppe (1, 2, 3, 4) le mélange gazeux produit.

2. Dispositif selon la revendication 1, **caractérisé en ce que** deux arrangements membrane-électrode (8) ou plus sont réunis pour former un empilement (11), des tôles métalliques (9) qui forment un canal entre des arrangements membrane-électrode (8) voisins respectifs étant disposées sous forme de plaques bipolaires, et comportant des moyens mécaniques pour maintenir l'empilement (11).

3. Dispositif selon la revendication 1 ou 2, **caractérisé en ce que** les tôles métalliques (9) sont formées de tôles ondulées constituées de préférence de titane ou d'un alliage de titane.

4. Dispositif selon l'une des revendications précédentes, **caractérisé en ce qu'**il est prévu au moins un premier canal transversal (13), formé par des évidements (12), pour l'amenée d'eau, et au moins un canal transversal (14) supplémentaire, formé par des évidements (12), pour l'évacuation du mélange gazeux et/ou de l'eau, ces canaux transversaux (13, 14) étant disposés au niveau des extrémités formant canal, opposées l'une à l'autre, des tôles métalliques (9).

5. Dispositif selon l'une des revendications précédentes, **caractérisé en ce que** les tôles métalliques (9) sont disposées et orientées de telle sorte que les canaux (10) formés par elles soient disposés pour l'essentiel verticalement entre le premier canal transversal inférieur (13) et le canal transversal supplémentaire supérieur (14).

6. Dispositif selon l'une des revendications précédentes, **caractérisé en ce que** chacun des arrangements membrane-électrode (8) est disposé dans un cadre (4), et les cadres (4) sont disposés dans un empilement (11) ou en formant un empilement dense (11), et sont encastrés entre deux plaques terminales (1, 2), chaque cadre (4) comportant au moins un évidement (12) pour le premier canal transversal (13) et au moins un évidement (12) pour le canal transversal supplémentaire (14).

7. Dispositif selon l'une des revendications précédentes, **caractérisé en ce que** chacune des tôles métalliques (9) est disposée dans un cadre (3), et les cadres (3) avec les tôles métalliques (9) sont incorporés dans l'empilement (11), chacune d'une manière dense entre deux cadres (4) comportant un arrangement membrane-électrode (8), chaque cadre (3, 4) comportant au moins un évidement (12) pour le premier canal transversal (13) et au moins un évidement (12) pour le canal transversal supplémentaire (14).

8. Dispositif selon l'une des revendications précédentes, **caractérisé en ce que** les tôles métalliques (9) comprennent sur leurs bords des évidements (24), qui sont traversés par des saillies (25) prévues dans le cadre (3) et forment une liaison avec correspondance de forme.

9. Dispositif selon l'une des revendications précédentes, **caractérisé en ce que** les cadres (3), en particulier pour les tôles métalliques (9), sont exécutés sous forme de pièces plastiques moulées par injection.

10. Dispositif selon l'une des revendications précédentes, **caractérisé en ce que** les cadres (4), en particulier pour les arrangements membrane-électrode (8), sont constitués de feuilles.

11. Dispositif selon l'une des revendications précédentes, **caractérisé en ce que** les cadres (3) comprennent, sur au moins un côté, un joint d'étanchéité périphérique (22) qui est fabriqué de préférence par le procédé de moulage par injection bicomposant en même temps que le cadre (3).

12. Dispositif selon l'une des revendications précédentes, **caractérisé en ce que** l'enveloppe (1, 2, 3, 4) est formée du cadre (3, 4) et des plaques terminales (1, 2).

13. Dispositif selon l'une des revendications précédentes, **caractérisé en ce que** chacune des plaques terminales (1, 2) comprend, sur son côté dirigé vers l'intérieur de l'empilement, une électrode (15), constituée de préférence de cuivre, qui est reliée d'une manière conductrice à une connexion électrique accessible de l'extérieur.

14. Dispositif selon l'une des revendications précédentes, **caractérisé en ce que** les électrodes (15) des plaques terminales (1, 2) sont séparées de l'intérieur de l'enveloppe par une feuille (16), de préférence constituée de titane.

15. Dispositif selon l'une des revendications précédentes, **caractérisé en ce que** dans au moins l'une des plaques terminales (1) est prévu un évidement (17, 18), débouchant dans un canal (13, 14), qui est de préférence formé en un connecteur de ligne (19) sur le côté extérieur.
